# EUROPÄISCHE PATENTSCHRIFT

(11) **EP 3 865 952 B1**
(45) Veröffentlichungstag und Bekanntmachung des Hinweises auf die Patenterteilung: **23.09.2026**
(21) Anmeldenummer: 21155386.2
(22) Anmeldetag: 05.02.2021
(51) Int. Cl.: G03H 1/20, G03H 1/26, G03H 1/02, G03H 1/00, G02B 26/08

(54) **HOLOGRAMMBELICHTUNGSMASCHINE UND VERFAHREN ZUM EINBRINGEN MEHRERER VOLUMENREFLEXIONSHOLOGRAMME IN EINEN HOLOGRAMMFILM**
HOLOGRAM EXPOSURE MACHINE AND METHOD FOR INSERTING MULTIPLE VOLUME REFLECTION HOLOGRAMS INTO A HOLOGRAM FILM
MACHINE D'EXPOSITION HOLOGRAMME ET PROCÉDÉ D'INTRODUCTION DE PLUSIEURS HOLOGRAMMES DE RÉFLEXION DE VOLUME DANS UN FILM HOLOGRAMME

(30) Priorität: 12.02.2020 DE 102020103617
(43) Veröffentlichungstag der Anmeldung: 18.08.2021
(73) Patentinhaber: Bundesdruckerei GmbH, 10969 Berlin (DE)
(72) Erfinder: Richter, Werner, 80999 München (DE); Langgaßner, Michael, 81245 München (DE); Karvounis, Gerasimos, 80993 München (DE)
(74) Vertreter: Hentrich Patent- & Rechtsanwaltspartnerschaft mbB

(56) Entgegenhaltungen:
- WO-A1-2014/065799
- DE-A1- 102006 061 220
- DE-A1- 102007 042 386

## Beschreibung

Die Erfindung betrifft eine Hologrammbelichtungsmaschine zum Einbringen eines Volumenreflexionshologramms in einen Filmabschnitt eines Hologrammfilms gemäß Anspruch 1. Die Hologrammbelichtungsmaschine umfasst, unter anderem, eine erste Lichtquelle zur Emission von Licht sowie eine Strahlführungsoptik zur Führung des von der ersten Lichtquelle emittierten Lichts. Ferner ist ein räumlicher Lichtmodulator vorhanden, der ausgebildet ist, Licht von der ersten Lichtquelle oder von einem Teil der Strahlführungsoptik zu empfangen und räumlich moduliertes Licht zurückzugeben. Zusätzlich ist ein Master für die Hologrammbelichtung mittels des vom Lichtmodulator zurückgegebenen Lichts vorhanden. Die Erfindung betrifft außerdem ein Verfahren zum Einbringen mehrere Volumenreflexionshologramme in einen Filmabschnitt eines Hologrammfilms gemäß Anspruch 6.

Aus dem Stand der Technik ist es bekannt, Hologramme als Sicherheitselemente in Sicherheitsdokumente oder Wertdokumente zu integrieren. Sicherheitselemente sind solche Entitäten, welche mindestens ein Merkmal aufweisen, welches ein unautorisiertes Duplizieren, Nachahmen und/oder Verfälschen eines Gegenstands erschwert, in welchen das Sicherheitselement integriert ist. Hologramme werden als Sicherheitselemente beispielsweise in Reisepässen oder Personalausweisen verwendet. Sie werden jedoch auch in Banknoten, Führerscheinen, Visa, anderen Wertzeichen, Etiketten oder Tickets, Kreditkarten, Bankkarten, Telefonkarten oder Ähnlichem eingesetzt.

Eine besondere Gruppe von Hologrammen stellen Volumenhologramme dar. Bei einem Volumenhologramm ist eine beugende Struktur des Hologramms im Volumen des holografischen Aufzeichnungsmaterials gespeichert, wie beispielsweise den Druckschriften DE 10 2012 215 540 A1, DE 10 2007 042 385 A1 und DE 10 2007 042 386 A1 zu entnehmen ist. Als Aufzeichnungsmaterialien für Volumenhologramme werden in Wert- und/oder Sicherheitsdokumenten in der Regel holografische Belichtungsfilme eingesetzt, die zumeist auf Rollen bereitgestellt werden. Diese Belichtungsfilme sind geeignet, Interferenzstrukturen zu speichern, deren charakteristische Abmessungen im Bereich der Lichtwellenlänge des Lichts liegen, welches zur Aufzeichnung bzw. Rekonstruktion des Hologramms verwendet wird.

Bei einem Kontaktkopierverfahren wird der holografische Belichtungsfilm vor einem Master angeordnet, in dem beugende Strukturen ausgebildet sind, die in den holografischen Belichtungsfilm "übertragen" werden sollen. Die beugenden Strukturen des Masters werden beim Kontaktkopierverfahren somit in den holografischen Film kopiert. Hierfür wird kohärentes Licht durch den holografischen Film, der in unmittelbarer Nähe vor dem Master oder in Kontakt mit dem Master vor diesem angeordnet ist, auf den Master gestrahlt. Die beugenden Strukturen in dem Master beugen das Licht so, dass das gebeugte Licht in den holografischen Film zurückgestrahlt wird. Dort interferiert dieses mit dem kohärenten Licht, welches zur Beleuchtung des Masters genutzt wird. In dem holografischen Film bildet sich somit eine Interferenzstruktur aus, welche durch das an dem Master gebeugte Licht festgelegt ist. Wird der holografische Film entwickelt und rekonstruiert, so gleicht die Rekonstruktion der, die beim Beleuchten des Masters zu beobachten ist. In dem holografischen Film wird ein Hologramm gespeichert, welches auch als Denisjuk-Hologramm bezeichnet wird und ein Volumenreflexionshologramm ist. Es versteht sich, dass das eingestrahlte Licht eine geeignete Wellenlänge (oder geeignete Wellenlängen) und eine geeignete Einstrahlrichtung (oder geeignete Einstrahlrichtungen) aufweisen muss, so dass eine Beugung an der Beugungsstruktur in der gewünschten Weise erfolgt. Ein Verfahren zur Herstellung eines Masters und ein Kontaktkopierverfahren sind der EP 0 896 260 A2 zu entnehmen.

Typischerweise werden bei bekannten Hologrammbelichtungsmaschinen mehrere Lichtquellen verwendet, wenn mehrere Hologramme, insbesondere mehrere Hologramme unterschiedlicher Farbe, in einen Hologrammfilm eingebracht werden sollen. Jeder Lichtquelle ist dabei ein eigener räumlicher Lichtmodulator zugewiesen. Wenn verschiedene Farben an nahezu den gleichen Positionen des Hologrammfilms, insbesondere pixelweise, eingebracht werden sollen, ist es sehr aufwändig die einzelnen Strahlführungsoptiken zu justieren.

Die DE 10 2006 061220 A1 beschreibt eine Hologrammbelichtungsmaschine mit einem Lichtmodulator, der von einer Steuerungseinrichtung angesteuert wird, um gezielt ein Hologramm in einen Hologrammfilm zu belichten, wobei der darin gezeigte "Spatial Light Modulator" ein transmissiver Lichtmodulator ist.

In der WO 2014 / 065 799 A1 werden ein Verfahren und ein System zur Belichtung eines Hologrammfilms beschrieben. Mit ihnen können personalisierte Sicherheitsmerkmale für ein Ausweis-, Wert- oder Sicherheitsdokument eingebracht werden. Für die Belichtung wird ein reflektives Verfahren genutzt.

Es ist daher die Aufgabe der vorliegenden Erfindung, eine verbesserte Hologrammbelichtungsmaschine und ein verbessertes Verfahren zum Einbringen mehrere Volumenreflexionshologramme in einen Hologrammfilm bereitzustellen.

Diese Aufgabe wird mit einer Hologrammbelichtungsmaschine mit dem Merkmalsbestand des Anspruchs 1 sowie mit einem Verfahren des Anspruchs 6 gelöst. Vorteilhafte Ausgestaltungen mit zweckmäßigen Weiterbildungen der Erfindung sind in den abhängigen Ansprüchen angegeben.

Die Hologrammbelichtungsmaschine zeichnet sich dabei insbesondere dadurch aus, dass mindestens eine zweite Lichtquelle zur Emission von Licht vorhanden ist, und dass die Strahlführungsoptik ausgebildet ist, auch das Licht der zweiten Lichtquelle an den räumlichen Lichtmodulator zu führen, der ausgebildet ist, räumlich moduliertes Licht der zweiten Lichtquelle für die Hologrammbelichtung am Master zurückzugeben. Damit ist der Vorteil verbunden, dass ein- und derselbe räumliche Lichtmodulator zur Belichtung des Hologrammfilms mit unterschiedlichen Lichtwellenlängen (oder Wellenlängenbereichen) genutzt werden kann, was die Komplexität der Hologrammbelichtungsmaschine drastisch reduziert und den Justageaufwand der Strahlführungsoptik minimiert. Vorzugsweise weist dabei das von der ersten Lichtquelle emittierte Licht eine erste Wellenlänge oder einen ersten Wellenlängenbereich auf, wobei das von der zweiten Lichtquelle emittierte Licht eine davon abweichende zweite Wellenlänge oder einen zweiten Lichtwellenlängenbereich auf.

Erfindungsgemäß umfasst die Strahlführungsoptik eine Ablenk- und Scanvorrichtung, die eine erste Eintrittsöffnung für das Licht der ersten Lichtquelle und eine zweite Eintrittsöffnung für das Licht der zweiten Lichtquelle aufweist, die einen ersten Scannerspiegel für die Ablenkung des über die erste Eintrittsöffnung einfallenden Lichts und einen zweiten Scannerspiegel für die Ablenkung des über die zweite Eintrittsöffnung einfallenden Lichts aufweist, und die ausgebildet ist, das abgelenkte Licht der ersten Lichtquelle und der zweiten Lichtquelle über eine gemeinsame Austrittsöffnung auszugeben. Die Ablenk- und Scanvorrichtung der Belichtungseinrichtung der Hologrammbelichtungsmaschine dient dabei als eine Art "Sammler" für die von den Lichtquellen emittierten Lichtstrahlen. Es ist die Möglichkeit gegeben, dass auch mehr als zwei Lichtquellen vorhanden sind, wobei die Ablenk- und Scanvorrichtung eine zur Anzahl der Lichtquellen entsprechende Anzahl an Eintrittsöffnungen und eine zur Anzahl der Lichtquellen entsprechende Anzahl an Scannerspiegeln umfasst. Auf diese Weise muss nur noch die Ablenk- und Scanvorrichtung entsprechend justiert werden, da "stromab" der Ablenk- und Scanvorrichtung die Strahlführungsoptik unverändert bleiben kann. Dadurch werden die Justagezeit und der Materialeinsatz bei der Hologrammbelichtungsmaschine deutlich reduziert.

Eine betriebssichere Auskopplung des Lichts aus der Ablenk- und Scanvorrichtung lässt sich erfindungsgemäß dadurch erreichen, dass ein Spiegel vorhanden ist, der ausgebildet ist, das von dem Einem der Scannerspiegel abgelenkte Licht in Richtung eines teiltransparenten Spiegels zu reflektieren, der ausgebildet ist, das vom dem Anderen der Scannerspiegel abgelenkte Licht in Richtung der Austrittsöffnung zu reflektieren und das von dem Spiegel einfallende Licht in die Richtung der Austrittsöffnung hindurchzulassen.

Um die Hologrammbelichtungsmaschine möglichst kompakt zu halten, ist es von Vorteil, wenn die Strahlführungsoptik einen Ablenkspiegel umfasst, der ausgebildet ist, das aus der Austrittsöffnung der Ablenk- und Scanvorrichtung austretende Licht auf einen polarisationsabhängigen Strahlteiler zu lenken, dessen Grenzfläche ausgebildet ist, Licht in einem ersten Polarisationszustandes abzulenken und Licht in einem vom ersten Polarisationszustand abweichenden weiteren Polarisationszustand hindurchzulassen.

Es ist von Vorteil, dass der räumliche Lichtmodulator mit unterschiedlichen Wellenlängen interagieren kann. Somit kann er also Licht von unterschiedlichen Lichtquellen räumlich modulieren und ist nicht auf eine bestimmte Lichtwellenlänge festgelegt. Er ist darüber hinaus ausgebildet, an einem ersten Modulatorbereich mit Licht einer ersten Wellenlänge oder eines ersten Wellenlängenbereichs und an einem anderen Modulatorbereich mit Licht einer zweiter Wellenlänge oder eines zweiten Wellenlängenbereichs, insbesondere zeitgleich, bestrahlt zu werden. **In** diesem Zusammenhang ist daher sinnvoll, wenn der räumliche Lichtmodulator derart angeordnet und ausgebildet ist, das durch den Strahlteiler transmittierte Licht zu empfangen und räumlich moduliert in Richtung des Strahlteilers zurückzugeben.

Die Hologrammbelichtungsmaschine lässt sich außerdem dadurch sehr kompakt bilden, dass die Strahlführungsoptik einen Einkoppelspiegel umfasst, der ausgebildet ist, das vom Lichtmodulator räumlich modulierte Licht in Richtung des Masters abzulenken.

Um die Hologrammbelichtung am Master positionsgenau durchzuführen, ist es zudem von Vorteil, wenn im Strahlengang zwischen dem Einkoppelspiegel und dem räumlichen Lichtmodulator, insbesondere zwischen dem Einkoppelspiegel und dem Strahlteiler, ein Objektiv (Abbildungsobjektiv) eingebunden ist. Auch dadurch ist ein wartungsarmes System für die Hologrammbelichtung geschaffen.

Die in Verbindung mit der erfindungsgemäßen Hologrammbelichtungsmaschine beschriebenen Vorteile und vorteilhaften Ausgestaltungen gelten in gleichem Maße auch für das erfindungsgemäße Verfahren zum Einbringen mehrerer Volumenreflexionshologramme in einen Filmabschnitt eines Hologrammfilms.

Es umfasst insbesondere die Schritte:
- Einbringen des Filmabschnitts in einen Belichtungsbereich an oder neben einem Master,
- Entsenden von Licht einer ersten Lichtquelle an eine erste Eintrittsöffnung einer Ablenk- und Scanvorrichtung,
- Ablenken des über die erste Eintrittsöffnung einfallenden Lichts an mehreren Spiegeln der Ablenk- und Scanvorrichtung, wodurch das Licht über eine Austrittsöffnung der Ablenk- und Scanvorrichtung austritt,
- räumliche Modulation des von der ersten Lichtquelle emittierten Lichts mittels eines räumlichen Lichtmodulators und anschließende Belichtung des Filmabschnitts mit dem vom Lichtmodulator räumlich modulierten Licht,
- Entsenden von Licht einer zweiten Lichtquelle an eine zweite Eintrittsöffnung der Ablenk- und Scanvorrichtung,
- Ablenken des über die zweite Eintrittsöffnung einfallenden Lichts an mehreren Spiegeln der Ablenk- und Scanvorrichtung, wodurch das Licht über die Austrittsöffnung der Ablenk- und Scanvorrichtung austritt, und
- räumliche Modulation des von der zweiten Lichtquelle emittierten Lichts mittels des räumlichen Lichtmodulators und anschließende Belichtung des Filmabschnitts mit dem vom Lichtmodulator räumlich modulierten Licht.

Damit ist die vorteilhafte Möglichkeit eines Zeitmultiplexverfahrens geschaffen, bei dem die Belichtung von zwei Hologrammen im Belichtungsfilm gleichzeitig erfolgen kann. Die Ablenk- und Scanvorrichtung bildet dabei eine Art "Sammler" für die unterschiedlichen Lichtstrahlen oder in anderen Worten den "Multiplexer" für die einzelnen Lichtstrahlen. Der räumliche Lichtmodulator bildet den "Demultiplexer". Dabei können unterschiedliche Farben, was gleichbedeutend mit unterschiedlichen Wellenlängen oder Wellenlängenbereichen ist, einbelichtet werden.

Dabei ist es von Vorteil, wenn die Modulation des von der ersten Lichtquelle emittierten Lichts an einem ersten Modulationsbereich des räumlichen Modulators erfolgt, und dass die Modulation des von der zweiten Lichtquelle emittierten Lichts an einem zweiten Modulationsbereich des räumlichen Modulators, insbesondere zeitgleich, erfolgt. Somit kann eine erste Scanlinie des von der ersten Lichtquelle emittierten, räumlich modulierten Lichts zeitgleich mit einer zweiten Scanlinie des von der zweiten Lichtquelle emittierten, räumlich modulierten Lichts ortsversetzt auf dem Filmabschnitt verfahren werden, um gleichzeitig zwei verschiedene Hologramme zu belichten. Dabei erfolgt eine Synchronisierung aus den jeweiligen Scanlinien mit dem vom räumlichen Lichtmodulator genierten "Bild". In diesem Zusammenhang ist es also von Vorteil, dass die Modulation des von der ersten Lichtquelle emittierten Lichts zeitgleich mit der Modulation des von der zweiten Lichtquelle emittierten Lichts erfolgt.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung darstellen. Es zeigen im Einzelnen:
- Figur 1: eine schematische Darstellung einer Hologrammbelichtungsmaschine zur Belichtung eines Volumenreflexionshologramms in einen Hologrammfilm,
- Figur 2: den Schnitt A-A aus Figur 1,
- Figur 3: eine Illustration einer Draufsicht auf einen sich am Master befindenden Filmabschnitt eines Hologrammfilms, über den zwei Scanlinien zur zeitgleichen Belichtung von zwei unterschiedlichen Volumenreflexionshologrammen streichen.

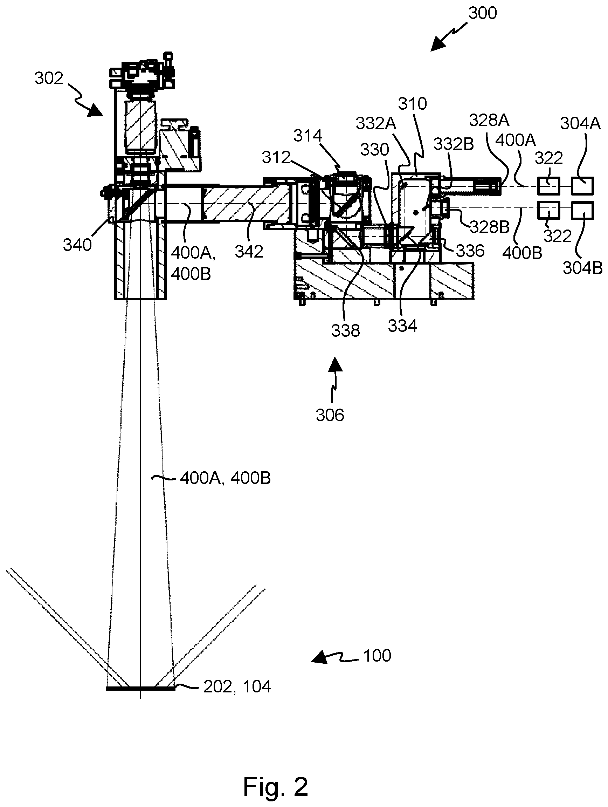

In Figur 2 ist eine Hologrammbelichtungsmaschine 300 zum Belichten von Hologrammen in einem Hologrammfilm 200 gezeigt. Eine solche Hologrammbelichtungsmaschine 300 wird auch als Holobelichter bezeichnet.

Die Hologrammbelichtungsmaschine 300 umfasst eine in der Zeichnung oben dargestellte Belichtungseinrichtung 302 und einen in der Zeichnung unten dargestellten Belichtungstisch 100.

Die Belichtung von Hologrammen erfolgt mittels kohärentem Licht. Hierfür weist die Belichtungeinrichtung 302 eine erste Lichtquelle 304A und eine zweite Lichtquelle 304B auf, welche vorliegend als ein cw-Laser ausgebildet sind und unterschiedliche Wellenlängen emittieren. Vorliegend steht "cw" für "continuous wave" und bedeutet "zeitlich konstant abgestrahlte Welle". Es ist die Möglichkeit gegeben, dass es sich bei den Lichtquellen 304A, 304B um einen gepulsten Laser handelt. Es können auch mehr als zwei der Lichtquellen 304A, 304B vorhanden sein, die jeweils eine unterschiedliche Wellenlänge des Lichts emittieren. Das Licht 400A, 400B der als Laser ausgebildeten Lichtquellen 304A, 304B weist einen ersten Polarisationszustand auf. Zum Führen des Lichts 400A, 400B wird eine Strahlführungsoptik 306 verwendet. Das Licht der Lichtquellen 304A, 304B wird bei der dargestellten Belichtungseinrichtung 302 zunächst, ggfs. unter Zuhilfenahme einer Strahlformungseinrichtung 322 zur insbesondere in einer Raumrichtung orientierten Strahlaufweitung, auf eine Ablenk- und Scanvorrichtung 310 der Strahlführungsoptik 306 geführt.

Die Ablenk- und Scanvorrichtung 310 umfasst eine erste Eintrittsöffnung 328A für das Licht 400A der ersten Lichtquelle 304A und eine zweite Eintrittsöffnung 328B für das Licht 400B der zweiten Lichtquelle 304B. Im Gehäuse der Ablenk- und Scanvorrichtung 310 ist ein erster Scannerspiegel 332A für die Ablenkung des über die erste Eintrittsöffnung 328A einfallenden Lichts 400A und ein zweiter Scannerspiegel 332B für die Ablenkung des über die zweite Eintrittsöffnung 328B einfallenden Lichts 400B vorhanden.

Die versetzt zueinander angeordneten Scannerspiegel 332A, 332B sind jeweils mit einem Galvanometerscanner gekoppelt, so dass die Scannerspiegel 332A, 332B verschiebbar oder verschwenkbar sind. Durch das Verschieben oder das Verschwenken der Scannerspiegel 332A, 332B kann eine einem "Scan", insbesondere einem Linienscan entsprechende Belichtung des Hologramms erfolgen. In anderen Worten wird der Hologrammfilm 200 zur Belichtung des Hologramms "abgetastet".

Die Ablenk- und Scanvorrichtung 310 ist vorliegend ausgebildet, das abgelenkte Licht 400A, 400B der ersten Lichtquelle 304A und der zweiten Lichtquelle 304B über eine gemeinsame Austrittsöffnung 330 auszugeben. Hierzu ist ein Spiegel 336 vorhanden, der ausgebildet ist, das von dem zweiten Scannerspiegel 332B abgelenkte Licht 400B in Richtung eines teiltransparenten Spiegels 334 zu reflektieren, der ausgebildet ist, das vom dem ersten Scannerspiegel 332A abgelenkte Licht 400A in Richtung der Austrittsöffnung 330 zu reflektieren und das von dem Spiegel 336 einfallende Licht 400B in die Richtung der Austrittsöffnung 330 hindurchzulassen.

Ausgehend von der Austrittsöffnung 330 der Ablenk- und Scanvorrichtung 310 gelangt das Licht 400A, 400B dann auf einen Ablenkspiegel 338, der ausgebildet ist, das aus der Austrittsöffnung 330 der Ablenk- und Scanvorrichtung 310 austretende Licht 400A, 400B auf einen polarisationsabhängigen Strahlteiler 312 abzulenken.

Das vom Ablenkspiegel 338 abgelenkte Licht 400A, 400B wird vorliegend auf einen polarisationsabhängigen Strahlteilerwürfel der Strahlführungsoptik 306 geführt. Dieser ist aus einem ersten Prisma und einem zweiten Prisma gebildet, an deren Grenzfläche eine polarisationsabhängige Strahlteilung erfolgt. Anstelle von Prismen kann auch eine Strahlteilerplatte Einsatz finden. Licht 400A, 400B des ersten Polarisationszustands wird durch diese Grenzfläche hindurchgelassen. Licht 400A, 400B eines weiteren, zu dem ersten Polarisationszustand orthogonalen Polarisationszustands wird hingegen an der Grenzfläche abgelenkt.

Das an der Grenzfläche des polarisationsabhängigen Strahlteilerwürfels 312 hindurchgelassene Licht 400A, 400B trifft auf einen räumlichen Lichtmodulator 314, der als ein sogenannter Liquid-Crystal-on-Silicon-Lichtmodulator (LCoS) ausgebildet ist. Der Lichtmodulator 314 umfasst eine Siliziumschicht, an der auftreffendes Licht 400A, 400B reflektiert wird. Auf dieser Siliziumschicht sind vorliegend elektronische Schaltelemente ausgebildet, die zum Schalten von Flüssigkristallzellen verwendet werden, die vor der zur Reflexion genutzten Oberfläche der Siliziumschicht angeordnet sind. Die einzelnen Flüssigkristallzellen können individuell in unterschiedliche Schaltzustände versetzt werden. Typischerweise liegt ein Array an Flüssigkristallzellen vor, so dass aus der Papierebene heraus oder in diese hinein versetzt weitere Reihen an Flüssigkristallzellen vorliegen. Abhängig von dem jeweiligen Schaltzustand der Flüssigkristallzellen wird ein Polarisationszustand des durchtretenden Lichts 400A, 400B geändert oder nicht geändert, wodurch das Licht 400A, 400B räumlich moduliert wird. Vereinfachend wird hier angenommen, dass in einem ersten Schaltzustand das in einem ersten Polarisationszustand auf den Lichtmodulator 314 auftreffende Licht 400A, 400B beim Durchtritt durch eine Flüssigkristallzelle, welche aufgrund der Reflexion an der Oberfläche der Siliziumschicht zweimal durchlaufen wird, insgesamt hinsichtlich der Polarisation so verändert wird, dass das Licht 400A, 400B anschließend in dem zu dem ersten Polarisationszustand orthogonalen weiteren Polarisationszustand polarisiert ist. Dieses hinsichtlich der Polarisation modulierte Licht 400A, 400B tritt durch eine transparente Schutzscheibe des räumlichen Lichtmodulators 314, wobei insbesondere eine Austrittsfläche der Schutzscheibe parallel zu der Reflexionsoberfläche der Siliziumschicht orientiert ist. Die Oberflächennormale des Lichtmodulators 314 ist somit orthogonal sowohl zu der Austrittsfläche der Schutzscheibe als auch zu der reflektierenden Oberfläche der Siliziumschicht.

Das modulierte Licht 400A, 400B trifft nach dem Austreten aus dem Lichtmodulator 314 erneut auf dem polarisationsabhängigen Strahlteiler 312 auf, wobei das vom LCoS zurückreflektierte modulierte Licht 400A, 400B abhängig von seinem Polarisationszustand die Grenzfläche des Strahlteilers 312 passieren kann oder nicht. Ist das modulierte Licht 400A, 400B, wie im exemplarisch dargestellten Fall, aufgrund des ersten Schaltzustands der Flüssigkristallzelle in den zu dem ersten Polarisationszustand orthogonalen weiteren Polarisationszustand überführt worden, so kann dieses die Grenzfläche des polarisationsabhängigen Strahlteilerwürfels 312 nicht passieren und wird abgelenkt, womit es, ggfs. unter Zuhilfenahme eines Polarisationsfilters, weiter zur Belichtung in Richtung des Belichtungstisches 100 geleitet wird. Anteile des Lichts 400A, 400B, die sich nach wie vor in dem ersten Polarisationszustand befinden und an dem polarisationsabhängigen Strahlteilerwürfel 312 ankommen, werden an dessen Grenzfläche nicht abgelenkt und gelangen daher nicht weiter in Richtung des sich unter der Belichtungseinrichtung 302 befindlichen Belichtungstisches 100. Durch den polarisationsabhängigen Strahlteilerwürfel 312 wird somit das Licht 400A, 400B abhängig von dem aufmodulierten Polarisationszustand räumlich hinsichtlich der Intensität moduliert.

Die Belichtung des Hologrammfilms 200 am Master 104 wird durch einen Einkoppelspiegel 340 realisiert. Der Einkoppelspiegel 340 ist also mit anderen Worten ausgebildet, das vom Lichtmodulator 314 räumlich modulierte Licht 400A, 400B in Richtung des Masters 104 abzulenken. Im Strahlengang zwischen dem Einkoppelspiegel 340 und dem Strahlteiler 312 ist außerdem noch ein Objektiv 342 (Abbildungsoptik) eingebunden.

Bei der Beschreibung der Belichtungseinrichtung 302 wurde bis hierher davon ausgegangen, dass der räumliche Lichtmodulator 314 den Polarisationszustand des Lichts 400A, 400B um 90 Grad dreht oder unverändert lässt. Es sind jedoch auch Änderungen möglich, die eine Drehung der Polarisationsrichtung zwischen 0 Grad und 90 Grad bewirken. Alle diese Drehungen führen dazu, dass das Licht 400A, 400B eine veränderte Amplitude und damit veränderte Intensität des weiteren Polarisationszustands aufweist. Je nach Drehwinkel variieren diese und nehmen mit dem Betrag der Drehung zwischen 0 Grad und 90 Grad zu. Hierdurch ist es möglich "Graustufen" zu belichten.

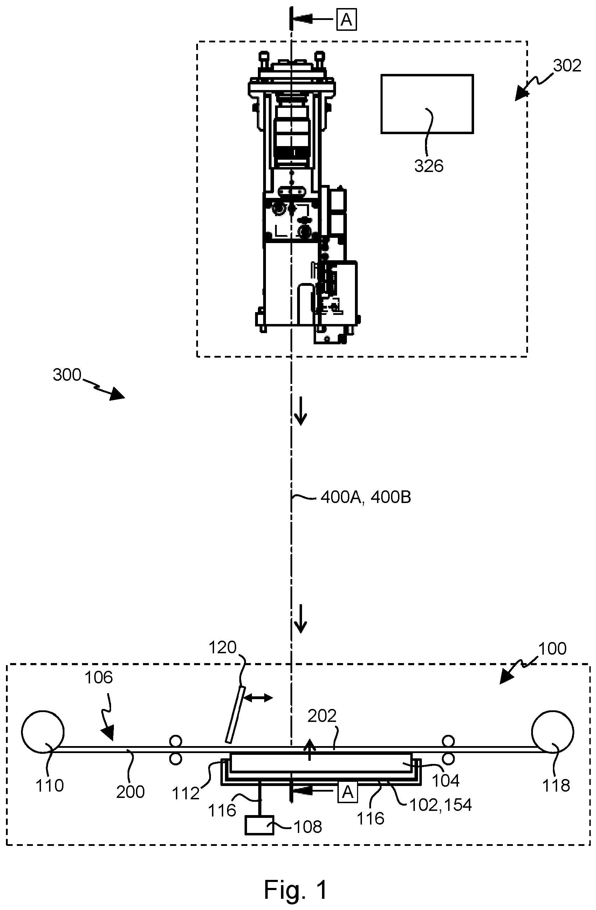

Ausweislich Figur 1 weist der Belichtungstisch 100 eine Halteeinrichtung 102 auf, in welcher ein Master 104 aufgenommen ist. Der Master 104 umfasst einen Träger, welcher in der Regel aus Glas oder einem anderen Werkstoff gebildet ist. Auch andere Trägermaterialien sind möglich, beispielsweise Metalle. Auf den Träger ist vorzugsweise mindestens eine optisch aktive Schicht, beispielsweise eine Beugungsschicht, aufgebracht, welche eine zu kopierende Beugungsstruktur umfasst. Vorliegend umfasst die Beugungsschicht des Masters 104 ein Volumenreflexionshologramm, welches kopiert werden soll.

Es ist zu erkennen, dass die Belichtungsmaschine 300, insbesondere der Belichtungstisch 100 eine Filmtransporteinrichtung 106 umfasst, die ausgebildet ist, den Hologrammfilm 200 relativ bezüglich der Halteeinrichtung 102 und damit relativ zum Master 104 zu transportieren. Die Filmtransporteinrichtung 106 ist für ein Aufnehmen des holografischen Films und Halten und/oder Führen des Films während der Belichtung des Hologramms vorgesehen. Bei der dargestellten Belichtungsmaschine 300 umfasst die Filmtransporteinrichtung 106 eine Filmrolle 110, auf der der Hologrammfilm 200 bereitgestellt wird. Dieser wird nach dem Belichten auf einer weiteren Filmrolle 118 aufgewickelt. Gegebenenfalls durchläuft der belichtete Hologrammfilm 200 eine Strecke zur Entwicklung des Hologramms, durch welche thermisch auf den Hologrammfilm 200 eingewirkt wird, um das Hologramm im Film zu fixieren, bevor der belichtete Hologrammfilm 200 auf der weiteren Filmrolle 118 wieder aufgewickelt wird. Der Hologrammfilm 200 wird jedenfalls in typischer Weise mittels Filmführungsrollen geführt. Es ist zu erkennen, dass sich der Hologrammfilm 200 über den Bereich des Masters 104 hinweg erstreckt, womit die Filmtransporteinrichtung 106 in anderen Worten also ausgebildet ist, einen zu belichtenden Filmabschnitt 202 relativ bezüglich des Masters 104 zu positionieren. **In** diesen Filmabschnitt 202 wird das Volumenreflexionshologramm belichtet, mithin einkopiert. Um eine betriebssichere Belichtung des Hologramms zu erzielen, liegt der Hologrammfilm 200 während des Belichtungsvorgangs an dem Master 104 an. Durch diese Anlage lassen sich Eigenbewegungen des holografischen Films unterdrücken, was die erzielbare Beugungseffizienz des hergestellten Hologramms steigert.

Bei der Belichtung tritt das modulierte Licht 400A, 400B, welches den weiteren Polarisationszustand aufweist, durch den zu belichtenden Filmabschnitt 202 des Hologrammfilms 200 hindurch und wird an der optisch aktiven Struktur der mindestens einen optisch aktiven Schicht des Masters 104 zurückgelenkt, z.B. bei einer als Beugungsschicht ausgebildeten optisch aktiven Schicht gebeugt. Das zurückgestrahlte Licht (nicht dargestellt) interferiert dann in dem Hologrammfilm 200 mit dem von dem Lichtmodulator 314 kommenden modulierten Licht 400A, 400B. Hierdurch wird die optisch aktive Struktur, z.B. die beugende Struktur, des Masters 104 in den Hologrammfilm 200 einbelichtet. Hierbei wird die optisch aktive Struktur pixelweise abhängig von der räumlichen Modulation entweder belichtet und kopiert oder andererseits nicht belichtet und somit auch nicht kopiert. Es entsteht somit eine Kopie der optisch aktiven Struktur, beispielsweise eine Kopie eines Volumenreflexionshologramms einer Mattscheibe.

Der Halteeinrichtung 102 ist vorliegend eine Drucklufteinrichtung 108 zugeordnet, die ausgebildet ist, für die Belichtung des Filmabschnitts 202 diesen mittels eines Unterdrucks an dem in der Halteeinrichtung 102 aufgenommenen Master 104 zumindest zeitweise zu fixieren. Hierzu ist vorliegend ein um den Master 104 umfangsseitig angeordneter Schlitz vorhanden, der somit eine Gasdurchtrittsanordnung 112 bildet. Die Gasdurchtrittsanordnung 112 rahmt also den Master 104 umfangsseitig und gewährleistet damit ein blasenfreies Anliegen des zu belichtenden Filmabschnitts 202 am Master 104. Vorliegend kann die Drucklufteinrichtung 108 aber zusätzlich dazu genutzt werden, um zeitweise einen Überdruck derart bereitzustellen, dass der Transport des Hologrammfilms 200 relativ bezüglich des Masters 104 von einem Luftpolster gestützt erfolgt, was Beschädigungen des Hologrammfilms 200 zusätzlich vorbeugt.

Um Gaseinschlüsse zwischen dem Hologrammfilm 200 und dem Master 104 zusätzlich herausdrücken zu können, ist vorliegend außerdem eine Aufstreifeinrichtung 120 vorhanden um den zu belichtenden Filmabschnitt 202 auf den Master 104 aufzustreifen. Diese Aufstreifeinrichtung 120 ist vorliegend durch einen zwischen zwei Anschlägen verschiebbaren Schlitten gebildet, an dem eine auf einer Drehachse drehbar gelagerte und beim Aufstreifen mit dem Filmabschnitt 202 wechselwirkende Anpressrolle gelagert ist.

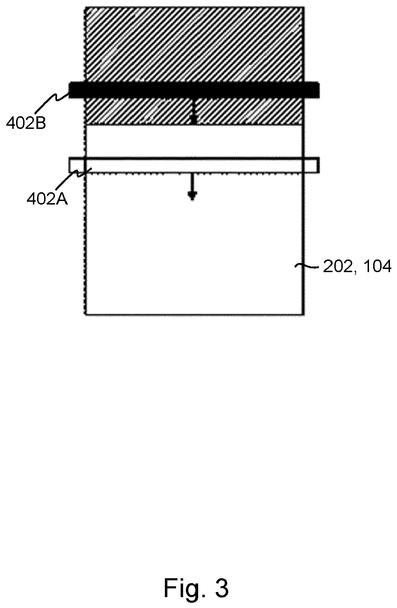

Mit der Hologrammbelichtungsmaschine 300 ist es möglich, dass zwei unterschiedliche Hologramme zeitgleich in den Filmabschnitt 202 des Hologrammfilms 200 belichtet werden, wie sich anhand der Illustration nach Figur 3 erkennen lässt. Diese zeigt eine erste Scanlinie 402A aus räumlich moduliertem Licht 400A der ersten Lichtquelle 304A. Außerdem ist eine zweite Scanlinie 402B aus räumlich moduliertem Licht 400B der zweiten Lichtquelle 304B gezeigt. Beide Scanlinien 402A, 402B überstreichen sukzessive und größtenteils zeitgleich den Hologrammfilm 200 am Master 104 in einem Zeitmultiplexverfahren. Das Verfahren zum Einbringen mehrerer Volumenreflexionshologramme in den Filmabschnitt 202 des Hologrammfilms 200, umfasst dabei insbesondere die Schritte:
- Einbringen des Filmabschnitts 202 in den Belichtungsbereich an oder neben dem Master 104,
- Entsenden von Licht 400A der ersten Lichtquelle 304A an die erste Eintrittsöffnung 328A der Ablenk- und Scanvorrichtung 310,
- Ablenken des über die erste Eintrittsöffnung 328A einfallenden Lichts 400A an den Spiegeln der Ablenk- und Scanvorrichtung 310, wodurch das Licht 400A über die Austrittsöffnung 330 der Ablenk- und Scanvorrichtung 310 austritt,
- räumliche Modulation des von der ersten Lichtquelle 304A emittierten Lichts 400A mittels des räumlichen Lichtmodulators 314 an einem ersten Modulationsbereich, der das "Bild" des ersten Hologramms vorgibt, und anschließende Belichtung des Filmabschnitts 202 mit dem vom Lichtmodulator 314 räumlich modulierten Licht 400A,
- wobei zeitgleich Licht 400B von der zweiten Lichtquelle 400 emittiert und an die zweite Eintrittsöffnung 328B der Ablenk- und Scanvorrichtung 310 geführt wird, sowie
- Ablenken des über die zweite Eintrittsöffnung 328B einfallenden Lichts 400B an mehreren Spiegeln der Ablenk- und Scanvorrichtung 310, wodurch das Licht 400B über die Austrittsöffnung 330 der Ablenk- und Scanvorrichtung 310 austritt, und
- räumliche Modulation des von der zweiten Lichtquelle 304B emittierten Lichts 400B mittels des räumlichen Lichtmodulators 314 an einem zweiten Modulationsbereich, der das "Bild" des zweiten Hologramms vorgibt, und anschließende Belichtung des Filmabschnitts 202 mit dem vom Lichtmodulator 314 räumlich modulierten Licht 400B.

Für die Steuerung der einzelnen Konstituenten der Belichtungsmaschine 300 ist außerdem eine Steuerungseinrichtung 326 vorhanden (Fig. 1). Die Steuerungseinrichtung 326 ist dabei in vorteilhafter Weise ausgebildet, die Lichtquellen 304A, 304B und/oder die Scannerspiegel 332A, 332B der Ablenk- und Scaneinrichtung 310 und/oder den Lichtmodulator 314 und/oder die Filmtransporteinrichtung 106 und/oder die Drucklufteinrichtung 108 und/oder die Aufstreifeinrichtung 120 zu steuern. **In** anderen Worten ist also die Steuerungseinrichtung 326 dazu ausgelegt, das erfindungsgemäße Verfahren mit der erfindungsgemäßen Hologrammbelichtungsmaschine 300 durchzuführen.

### BEZUGSZEICHENLISTE

- 100: Belichtungstisch
- 102: Halteeinrichtung
- 104: Master
- 106: Filmtransporteinrichtung
- 108: Drucklufteinrichtung (Saugeinrichtung und/oder Blaseinrichtung)
- 110: Filmrolle (unbelichteter Holofilm)
- 112: Gasdurchtrittsanordnung
- 116: Kanal (Druckluft/Saugluft)
- 118: weitere Filmrolle (belichteter Holofilm)
- 120: Aufstreifeinrichtung
- 200: Hologrammfilm
- 202: Filmabschnitt (zu belichtender Filmabschnitt)
- 300: Hologrammbelichtungsmaschine
- 302: Belichtungseinrichtung
- 304A: erste Lichtquelle (z.B. Laser)
- 304B: zweite Lichtquelle (z.B. Laser)
- 306: Strahlführungsoptik
- 310: Ablenk- und Scaneinrichtung
- 312: Strahlteiler
- 314: Lichtmodulator
- 322: Strahlformungseinrichtung (z.B. Powell- oder Zylinderlinse)
- 326: Steuerungseinrichtung
- 328A: erste Eintrittsöffnung
- 328B: zweite Eintrittsöffnung
- 330: Austrittsöffnung
- 332A: erste Scannerspiegel
- 332B: zweiter Scannerspiegel
- 334: teiltransparenter Spiegel
- 336: Spiegel
- 338: Ablenkspiegel
- 340: Einkoppelspiegel
- 342: Objektiv
- 400A: Licht (erste Lichtquelle)
- 400B: Licht (zweite Lichtquelle)
- 402A: erste Scanlinie
- 402B: zweite Scanlinie

## Patentansprüche

1. Hologrammbelichtungsmaschine (300) zum Einbringen eines Volumenreflexionshologramms in einen Filmabschnitt (202) eines Hologrammfilms (200),
mit einer ersten Lichtquelle (304A) zur Emission von Licht (400A),
mit einer Strahlführungsoptik (306) zur Führung des von der ersten Lichtquelle (304A) emittierten Lichts (400A),
mit einem räumlichen Lichtmodulator (314) in Form eines Liquid-Crystal-on-Silicon-Lichtmodulators, der ausgebildet ist, Licht (400A) von der ersten Lichtquelle (304A) oder von einem Teil der Strahlführungsoptik (306) zu empfangen und räumlich moduliertes Licht (400A) durch Reflektieren an einer Siliziumschicht zurückzugeben,
sowie mit einem Master (104) für die Hologrammbelichtung mittels des vom Lichtmodulator (314) zurückgegebenen Lichts (400A),
wobei
mindestens eine zweite Lichtquelle (304B) zur Emission von Licht (400B) vorhanden ist, und wobei die Strahlführungsoptik (306) ausgebildet ist, auch das Licht (400B) der zweiten Lichtquelle (304B) an den räumlichen Lichtmodulator (314) in Form des Liquid-Crystal-on-Silicon-Lichtmodulators zu führen, der ausgebildet ist, räumlich moduliertes Licht (400B) der zweiten Lichtquelle (304B) für die Hologrammbelichtung am Master (104) durch Reflektieren an der Siliziumschicht zurückzugeben, **dadurch gekennzeichnet, dass** die Strahlführungsoptik (306) eine Ablenk- und Scanvorrichtung (310) umfasst, die eine erste Eintrittsöffnung (328A) für das Licht (400A) der ersten Lichtquelle (304A) und eine zweite Eintrittsöffnung (328B) für das Licht (400B) der zweiten Lichtquelle (304B) aufweist, die einen ersten Scannerspiegel (332A) für die Ablenkung des über die erste Eintrittsöffnung (328A) einfallenden Lichts (400A) und einen zweiten Scannerspiegel (332B) für die Ablenkung des über die zweite Eintrittsöffnung (328B) einfallenden Lichts (400B) aufweist, und die ausgebildet ist, das abgelenkte Licht (400A, 400B) der ersten Lichtquelle (304A) und der zweiten Lichtquelle (304B) über eine gemeinsame Austrittsöffnung (330) auszugeben, und wobei ein Spiegel (336) vorhanden ist, der ausgebildet ist, das von dem einen der Scannerspiegel (332A, 332B) abgelenkte Licht (400A, 400B) in Richtung eines teiltransparenten Spiegels (334) zu reflektieren, der ausgebildet ist, das von dem anderen der Scannerspiegel (332A, 332B) abgelenkte Licht (400A, 400B) in Richtung der Austrittsöffnung (330) zu reflektieren und das von dem Spiegel (336) einfallende Licht (400A, 400B) in die Richtung der Austrittsöffnung (330) hindurchzulassen.

2. Hologrammbelichtungsmaschine (300) nach Anspruch 1, **dadurch gekennzeichnet, dass** die Strahlführungsoptik (306) einen Ablenkspiegel (338) umfasst, der ausgebildet ist, das aus der Austrittsöffnung (330) der Ablenk- und Scanvorrichtung (310) austretende Licht (400A, 400B) auf einen polarisationsabhängigen Strahlteiler (312) zu lenken, dessen Grenzfläche ausgebildet ist, Licht (400A, 400B) in einem ersten Polarisationszustand abzulenken und Licht (400A, 400B) in einem vom ersten Polarisationszustand abweichenden weiteren Polarisationszustand hindurchzulassen.

3. Hologrammbelichtungsmaschine (300) nach Anspruch 2, **dadurch gekennzeichnet, dass** der räumliche Lichtmodulator (314) derart angeordnet und ausgebildet ist, das durch den Strahlteiler (312) transmittierte Licht (400A, 400B) zu empfangen und räumlich moduliert in Richtung des Strahlteilers (312) zurückzugeben.

4. Hologrammbelichtungsmaschine (300) nach einem der Ansprüche 1 bis 3, **dadurch gekennzeichnet, dass** die Strahlführungsoptik (306) einen Einkoppelspiegel (340) umfasst, der ausgebildet ist, das vom Lichtmodulator (314) räumlich modulierte Licht (400A, 400B) in Richtung des Masters (104) abzulenken.

5. Hologrammbelichtungsmaschine (300) nach Anspruch 4, **dadurch gekennzeichnet, dass** im Strahlengang zwischen dem Einkoppelspiegel (340) und dem räumlichen Lichtmodulator (314), insbesondere zwischen dem Einkoppelspiegel (340) und dem Strahlteiler (312), ein Objektiv (342) eingebunden ist.

6. Verfahren zum Einbringen mehrerer Volumenreflexionshologramme in einen Filmabschnitt (202) eines Hologrammfilms (200) mit einer Hologrammbelichtungsmaschine (300) nach einem der Ansprüche 1 bis 5, umfassend die Schritte:
- Einbringen des Filmabschnitts (202) in einen Belichtungsbereich an oder neben einem Master (104),
- Entsenden von Licht (400A) einer ersten Lichtquelle (304A) an eine erste Eintrittsöffnung (328A) einer Ablenk- und Scanvorrichtung (310),
- Ablenken des über die erste Eintrittsöffnung (328A) einfallenden Lichts (400A) an mehreren Spiegeln der Ablenk- und Scanvorrichtung (310), wodurch das Licht (400A) über eine Austrittsöffnung (330) der Ablenk- und Scanvorrichtung (310) austritt,
- räumliche Modulation des von der ersten Lichtquelle (304A) emittierten Lichts (400A) mittels eines räumlichen Lichtmodulators (314) und anschließende Belichtung des Filmabschnitts (202) mit dem vom Lichtmodulator (314) räumlich modulierten Licht (400A),
- Entsenden von Licht (400B) einer zweiten Lichtquelle (304B) an eine zweite Eintrittsöffnung (328B) der Ablenk- und Scanvorrichtung (310),
- Ablenken des über die zweite Eintrittsöffnung (328B) einfallenden Lichts (400B) an mehreren Spiegeln der Ablenk- und Scanvorrichtung (310), wodurch das Licht (400B) über die Austrittsöffnung (330) der Ablenk- und Scanvorrichtung (310) austritt, und
- räumliche Modulation des von der zweiten Lichtquelle (304B) emittierten Lichts (400B) mittels des räumlichen Lichtmodulators (314) und anschließende Belichtung des Filmabschnitts (202) mit dem vom Lichtmodulator (314) räumlich modulierten Licht (400B).

7. Verfahren nach Anspruch 6, **dadurch gekennzeichnet, dass** die Modulation des von der ersten Lichtquelle (304A) emittierten Lichts (400A) an einem ersten Modulationsbereich des räumlichen Lichtmodulators (314) erfolgt, und dass die Modulation des von der zweiten Lichtquelle (304B) emittierten Lichts (400B) an einem zweiten Modulationsbereich des räumlichen Modulators (314) erfolgt.

8. Verfahren nach Anspruch 7, **dadurch gekennzeichnet, dass** die Modulation des von der ersten Lichtquelle (304A) emittierten Lichts (400A) zeitgleich mit der Modulation des von der zweiten Lichtquelle (304B) emittierten Lichts (400B) erfolgt.

## Claims

1. A hologram exposure machine (300) for recording a volume reflection hologram onto a film section (202) of a hologram film (200),
with a first light source (304A) for emitting light (400A),
with beam-guiding optics (306) for guiding the light (400A) emitted by the first light source (304A),
with a spatial light modulator (314) in the form of a liquid-crystal-on-silicon light modulator, which is configured to receive light (400A) from the first light source (304A) or from a portion of the beam-guiding optics (306) and to return spatially modulated light (400A) by reflection off a silicon layer,
and with a master (104) for hologram exposure using the light (400A) returned by the light modulator (314),
wherein
at least a second light source (304B) is provided for emitting light (400B), and wherein the beam-guiding optics (306) are configured to also guide the light (400B) from the second light source (304B) to the spatial light modulator (314) in the form of the liquid-crystal-on-silicon light modulator, which is configured to return spatially modulated light (400B) from the second light source (304B) for hologram exposure on the master (104) by reflection off the silicon layer, **characterized in that** the beam-guiding optics (306) comprise a deflection and scanning device (310) having a first entrance aperture (328A) for the light (400A) from the first light source (304A) and a second entrance aperture (328B) for the light (400B) from the second light source (304B), which comprises a first scanner mirror (332A) for deflecting the light (400A) incident through the first entrance aperture (328A) and a second scanner mirror (332B) for deflecting the light (400B) incident through the second entrance aperture (328B), and which is configured to direct the deflected light (400A, 400B) from the first light source (304A) and the second light source (304B) via a common exit aperture (330) , and wherein a mirror (336) is provided, which is configured to reflect the light (400A, 400B) incindent from the one of the scanner mirrors (332A, 332B) towards a partially transparent mirror (334), which is configured to reflect the light (400A, 400B) deflected by the other one of the scanner mirrors (332A, 332B) toward the exit aperture (330) and to transmit the light (400A, 400B) incident from the mirror (336) in the direction of the exit aperture (330) .

2. The hologram exposure machine (300) according to claim 1, **characterized in that** the beam-guiding optics (306) comprise a deflection mirror (338) configured to direct the light (400A, 400B) emerging from the exit aperture (330) of the deflection and scanning device (310) toward a polarization-dependent beam splitter (312), the interface of which is configured to deflect light (400A, 400B) in a first polarization state and to transmit light (400A, 400B) in a further polarization state differing from the first polarization state.

3. The hologram exposure machine (300) according to claim 2, **characterized in that** the spatial light modulator (314) is arranged and configured such that the light transmitted (400A, 400B) through the beam splitter (312) and to return it spatially modulated in the direction of the beam splitter (312).

4. The hologram exposure machine (300) according to any one of claims 1 to 3, **characterized in that** the beam-guiding optics (306) comprise a coupling mirror (340) configured to redirect the light spatially modulated (400A, 400B) by the light modulator (314) in the direction of the master (104).

5. The hologram exposure machine (300) according to claim 4, **characterized in that** an objective (342) is incorporated in the beam path between the coupling mirror (340) and the spatial light modulator (314), in particular between the coupling mirror (340) and the beam splitter (312).

6. A method for embedding multiple volume reflection holograms into a film section (202) of a hologram film (200) using a hologram exposure machine (300) according to any one of claims 1 to 5, comprising the steps of:
- inserting the film section (202) into an exposure area at or adjacent to a master (104),
- sending light (400A) from a first light source (304A) to a first entrance aperture (328A) of a deflection and scanning device (310),
- deflecting the light (400A) incident through the first entrance aperture (328A) at a plurality of mirrors of the deflection and scanning device (310), whereby the light (400A) exits through an exit aperture (330) of the deflection and scanning device (310),
- spatially modulating the light (400A) emitted by the first light source (304A) using a spatial light modulator (314) and subsequently exposing the film section (202) with the light (400A) spatially modulated by the light modulator (314),
- sending light (400B) from a second light source (304B) to a second entrance aperture (328B) of the deflection and scanning device (310),
- deflecting the light (400B) incident through the second entrance aperture (328B) at multiple mirrors of the deflection and scanning device (310), whereby the light (400B) exits through the exit aperture (330) of the deflection and scanning device (310), and
- spatially modulating the light (400B) emitted by the second light source (304B) by means of the spatial light modulator (314) and subsequently exposing the film section (202) with the light (400B) spatially modulated by the light modulator (314).

7. The method according to claim 6, **characterized in that** the light (400A) emitted by the first light source (304A) is modulated at a first modulation region of the spatial modulator (314), and that the light (400B) takes place at a second modulation region of the spatial light modulator (314).

8. The method according to claim 7, **characterized in that** the modulation of the light (400A) emitted by the first light source (304A) occurs simultaneously with the modulation of the light (400B) emitted by the second light source (304B).

## Revendications

1. Machine d'exposition d'hologramme (300) pour l'introduction d'un hologramme par réflexion en volume dans une section de film (202) d'un film d'hologramme (200),
avec une première source de lumière (304A) pour l'émission de lumière (400A),
avec une optique de guidage de faisceau (306) pour le guidage de la lumière (400A) émise par la première source de lumière (304A),
avec un modulateur de lumière (314) spatial sous la forme d'un modulateur de lumière à cristaux liquides sur silicone qui est formé afin de recevoir la lumière (400A) de la première source de lumière (304A) ou d'une partie de l'optique de guidage de faisceau (306) et de rendre la lumière (400A) modulée dans l'espace par réflexion au niveau d'une couche de silicium,
ainsi qu'avec un maître (104) pour l'exposition d'hologramme au moyen de la lumière (400A) rendue par le modulateur de lumière (314),
dans lequel
au moins une seconde source de lumière (304B) pour l'émission de lumière (400B) est présente, et dans lequel l'optique de guidage de faisceau (306) est formée afin de guider également la lumière (400B) de la seconde source de lumière (304B) au niveau du modulateur de lumière (314) spatial sous la forme du modulateur de lumière à cristaux liquides sur silicone qui est formé afin de rendre la lumière (400B) modulée dans l'espace de la seconde source de lumière (304B) pour l'exposition d'hologramme au niveau du maître (104) par réflexion au niveau de la couche de silicium, **caractérisé en ce que** l'optique de guidage de faisceau (306) comprend un dispositif de déviation et de balayage (310) qui présente une première ouverture d'entrée (328A) pour la lumière (400A) de la première source de lumière (304A) et une seconde ouverture d'entrée (328B) pour la lumière (400B) de la seconde source de lumière (304B) qui présente un premier miroir de scanner (332A) pour la déviation de la lumière (400A) incidente par le biais de la première ouverture d'entrée (328A) et un second miroir de scanner (332B) pour la déviation de la lumière (400B) incidente par le biais de l'ouverture d'entrée (328B), et qui est formé afin d'émettre la lumière déviée (400A, 400B) de la première source de lumière (304A) et de la seconde source de lumière (304B) par le biais d'une ouverture de sortie commune (330), et dans lequel un miroir (336) est présent, lequel est formé afin de réfléchir la lumière (400A, 400B) déviée par l'un des miroirs de scanner (332A, 332B) en direction d'un miroir (334) partiellement transparent qui est formé afin de réfléchir la lumière (400A, 400B) déviée par l'autre des miroirs de scanner (332A, 332B) en direction de l'ouverture de sortie (330) et de faire passer la lumière (400A, 400B) incidente par le miroir (336) dans la direction de l'ouverture de sortie (330).

2. Machine d'exposition d'hologramme (300) selon la revendication 1, **caractérisée en ce que** l'optique de guidage de faisceau (306) comprend un miroir de déviation (338) qui est formé afin de diriger la lumière (400A, 400B) sortant de l'ouverture de sortie (330) du dispositif de déviation et de balayage (310) sur un séparateur de faisceau (312) dépendant de la polarisation, dont la surface limite est formée afin de dévier la lumière (400A, 400B) dans un premier état de polarisation et de faire passer la lumière (400A, 400B) dans un autre état de polarisation divergeant du premier état de polarisation.

3. Machine d'exposition d'hologramme (300) selon la revendication 2, **caractérisée en ce que** le modulateur de lumière (314) spatial est agencé et formé de manière à recevoir la lumière (400A, 400B) transmise par le séparateur de faisceau (312) et à la rendre de manière modulée dans l'espace en direction du séparateur de faisceau (312).

4. Machine d'exposition d'hologramme (300) selon l'une quelconque des revendications 1 à 3, **caractérisée en ce que** l'optique de guidage de faisceau (306) comprend un miroir d'injection (340) qui est formé afin de dévier la lumière (400A, 400B) modulée dans l'espace par le modulateur de lumière (314) en direction du maître (104).

5. Machine d'exposition d'hologramme (300) selon la revendication 4, **caractérisée en ce qu'**un objectif (342) est intégré dans la trajectoire de faisceau entre le miroir d'injection (340) et le modulateur de lumière (314) spatial, en particulier entre le miroir d'injection (340) et le séparateur de faisceau (312).

6. Procédé d'introduction de plusieurs hologrammes par réflexion en volume dans une section de film (202) d'un film d'hologramme (200) avec une machine d'exposition d'hologramme (300) selon l'une quelconque des revendications 1 à 5, comprenant les étapes suivantes :
- l'introduction de la section de film (202) dans une zone d'exposition au niveau ou à côté d'un maître (104),
- l'envoi de lumière (400A) d'une première source de lumière (304A) au niveau d'une première ouverture d'entrée (328A) d'un dispositif de déviation et de balayage (310),
- la déviation de la lumière (400A) incidente par le biais de la première ouverture d'entrée (328A) au niveau de plusieurs miroirs du dispositif de déviation et de balayage (310), selon lequel la lumière (400A) sort par le biais d'une ouverture de sortie (330) du dispositif de déviation et de balayage (310),
- la modulation spatiale de la lumière (400A) émise par la première source de lumière (304A) au moyen d'un modulateur de lumière (314) spatial et l'exposition consécutive de la section de film (202) avec la lumière (400A) modulée dans l'espace par le modulateur de lumière (314),
- l'envoi de lumière (400A) d'une seconde source de lumière (304B) au niveau d'une seconde ouverture d'entrée (328B) d'un dispositif de déviation et de balayage (310),
- la déviation de la lumière (400B) incidente par le biais de la seconde ouverture d'entrée (328B) au niveau de plusieurs miroirs du dispositif de déviation et de balayage (310), selon lequel la lumière (400B) sort par le biais de l'ouverture de sortie (330) du dispositif de déviation et de balayage (310), et
- la modulation spatiale de la lumière (400B) émise par la seconde source de lumière (304B) au moyen du modulateur de lumière (314) spatial et l'exposition consécutive de la section de film (202) avec la lumière (400B) modulée dans l'espace par le modulateur de lumière (314).

7. Procédé selon la revendication 6, **caractérisé en ce que** la modulation de la lumière (400A) émise par la première source de lumière (304A) est effectuée au niveau d'une première zone de modulation du modulateur de lumière (314) spatial, et **en ce que** la modulation de la lumière (400B) émise par la seconde source de lumière (304B) est effectuée au niveau d'une seconde zone de modulation du modulateur (314) spatial.

8. Procédé selon la revendication 7, **caractérisé en ce que** la modulation de la lumière (400A) émise par la première source de lumière (304A) est effectuée en même temps que la modulation de la lumière (400B) émise par la seconde source de lumière (304B).
